Europäisches Patentamt

European Patent Office

Office européen des brevets

(11) Veröffentlichungsnummer: **0 383 013**
**A2**

## (12) EUROPÄISCHE PATENTANMELDUNG

(21) Anmeldenummer: **90100482.0**

(22) Anmeldetag: **11.01.90**

(51) Int. Cl.⁵: **A01B 29/00**

(30) Priorität: **17.02.89 DE 8901858 U**

(43) Veröffentlichungstag der Anmeldung:
**22.08.90 Patentblatt 90/34**

(84) Benannte Vertragsstaaten:
**DE FR GB**

(71) Anmelder: **Rabewerk GmbH + Co.**

**D-4515 Bad Essen(DE)**

(72) Erfinder: **Bohnenkamp, Wilfried, Dipl.-Ing.**
**Klusring 25**
**D-4515 Bad Essen(DE)**

(74) Vertreter: **Missling, Arne, Dipl.-Ing.**
**Patentanwalt Bismarckstrasse 43**
**D-6300 Giessen(DE)**

(54) **Ackerwalze.**

(57) Die Erfindung bezieht sich auf eine Ackerwalze mit zumindest einem um eine horizontale Achse (1) drehbaren Walzenelement (2) und einem in sich geschlossenen, das Walzenelement (2) lagernden, in einer horizontalen Ebene angeordneten Rahmen (3). Um eine derartige Ackerwalze im Frontanbau, als Nachläufer oder als Wendepacker verwenden zu können, ohne daß grundsätzliche Änderungen an der Ausgestaltung der Ackerwalze erforderlich wären, ist erfindungsgemäß ein Bügel (4) vorgesehen, welcher sich in einer vertikalen Ebene mittig zwischen einem ersten (5) und einem zweiten (6), jeweils zur Achse (1) des Walzenelements (2) parallelen Balken des Rahmens (3) erstreckt und das Walzenelement (2) übergreift, mit Anschlüssen (7, 8, 9) zum Ankoppeln an ein Dreipunktgstänge eines Schleppers versehen ist und um eine vertikale, im Bereich des der Anschlußseite des Bügels gegenüberliegenden zweiten Balken (6) angeordnete Achse (10) schwenkbar ist.

Fig.1

EP 0 383 013 A2

## Ackerwalze

Die Erfindung betrifft eine Ackerwalze insbesondere mit Fangarmanschlüssen für den Einsatz an Drehpflügen bzw. als Pflugnachläufer, mit zumindest einem um eine horizontale Achse drehbaren Walzenelement und einem in sich geschlossenen, das Walzenelement lagernden, in einer horizontalen Ebene angeordneten Rahmen.

Ackerwalzen werden in den verschiedensten Ausführungsformen gebaut, so beispielsweise als Untergrundpacker. Derartige bekannte Untergrundpacker werden in den verschiedensten Anwendungsformen verwendet, beispielsweise als Nachläufer für Pflüge, wobei möglicherweise noch eine weitere Walze mit dem Nachläufer gekoppelt sein kann, so wie dies bei Wendepackern bekannt ist. Weiterhin werden Ackerwalzen auch im Frontanbau an einem Schlepper verwendet. Um die Ackerwalze transportieren zu können, ist es auch bekannt, diese direkt am Heck eines Schleppers anzubauen. Beispiele für derartige Ackerwalzen sind aus den Gebrauchsmustern 83 36 159 und 82 30 833 bekannt.

Bei diesen Ackerwalzen erweist es sich insgesamt als nachteilig, daß diese für die jeweiligen unterschiedlichen Anwendungsarten speziell ausgerüstet werden müssen, so daß es dem Landwirt nicht oder nur nach erheblichen Umbauten möglich ist, bekannte Ackerwalzen für alle die oben beschriebenen Anwendungsfälle zu verwenden bzw. an einem Schlepper anzubauen. Für die Hersteller erweist es sich als nachteilig, daß die verschiedensten Ausführungsformen von Ackerwalzen gefertigt und auf Lager gehalten werden müssen, um für das jeweilige Anwendungsgebiet eine speziell angepaßte Ackerwalze anbieten zu können. Dabei erweist es sich als besonders nachteilig, daß zusätzlich zu den rein geometrischen Anforderungen hinsichtlich der Anbaubarkeit der Ackerwalze an andere Geräte oder einen Schlepper die Ackerwalzen auch, abhängig von der jeweiligen Verwendungsart, spezifische technische Erfordernisse erfüllen müssen, beispielsweise lenkbar oder verschwenkbar sein müssen. Auch daraus ergibt sich, daß die aus dem Stand der Technik bekannten Ackerwalzen nicht universell verwendbar sind.

Der Erfindung liegt die Aufgabe zugrunde, eine Ackerwalze der eingangs genannten Art zu schaffen, welche bei einfachem Aufbau und einfacher, betriebssicherer Handhabbarkeit für die verschiedensten Anwendungsfälle verwendbar ist und schnell und einfach umrüstbar ist.

Erfindungsgemäß wird die Aufgabe dadurch gelöst, daß ein Bügel vorgesehen ist, welcher sich in einer vertikalen Ebene mittig zwischen einem ersten und einem zweiten, jeweils zur Achse des Walzenelements parallelen Balken des Rahmens erstreckt und das Walzenelement übergreift, mit Anschlüssen zum Ankoppeln an ein Dreipunktgestänge eines Schleppers versehen ist und um eine vertikale, im Bereich des der Anschlußseite des Bügels gegenüberliegenden zweiten Balkens angeordnete Achse schwenkbar ist. Der Bügel ist nicht demontierbar an den Rahmen gelagert, stellt somit einen Bestandteil der Ackerwalze und kein Zusatzteil dar, unabhängig von der jeweiligen Einsatzart der Ackerwalze.

Die erfindungsgemäße Ackerwalze zeichnet sich durch eine Reihe erheblicher Vorteile aus. Da erfindungsgemäße die Ankoppelung der Ackerwalze nicht an dem Rahmen, sondern an dem erfindungsgemäßen Bügel erfolgt, ist es möglich, durch die Schaffung einer geeigneten Bewegbarkeit zwischen dem Bügel und dem Rahmen eine Anpassng an die jeweiligen Erfordernisse, welches sich aus der Art der Verwendung der Ackerwalze ergeben, vorzunehmen. Da der Rahmen der Ackerwalze für alle Anwendungsfälle unverändert beibehalten werden kann, ist es möglich, diesen standardisiert auszubilden. Daraus ergeben sich erhebliche Kosteneinsparungen bei der Herstellung und Lagerhaltung der erfindungsgemäßen Ackerwalze. Ein weiterer, wesentlicher Vorteil der Ackerwalze besteht darin, daß die Art und Form des Bügels für alle Anwendungsfälle gleich ist, d. h. unabhängig von der Art des Anbaus der Ackerwalze an einem Schlepper oder einem Bodenbearbeitungsgerät der gleiche Bügel verwendbar ist, welcher lediglich geringfügig modifiziert werden muß.

Da bei einer Umstellung der Verwendungsart der Ackerwalze Umrüstarbeiten lediglich im Bereich des Bügels erforderlich sind, können diese ohne Beeinträchtigung der Betriebssicherheit der Ackerwalze leicht von der jeweiligen Bedienungsperson vorgenommen werden. Dabei kann es nötig sein, Fangarme zu montieren bzw. zu demontieren. Dabei ist es möglich, die Fangarme an der Ackerwalze zu belassen, auch wenn sie momentan nicht benötigt werden.

In einer vorteilhaften Ausgestaltungsform der Erfindung ist vorgesehen, daß der Bügel an dessen Anschlußseite seitlich relativ zu dem ersten Balken des Rahmens verschiebbar gelagert ist. Dabei kann es sich weiterhin als besonders günstig erweisen, wenn der Bügel innerhalb eines vorgegebenen Schwenkbereichs verschiebbar ist, d. h. die Verschwenkung des Bügels auf einen Maximalwert begrenzt wird. Es ist somit möglich die Ackerwalze als Frontpacker an einem Schlepper anzubauen, wobei eine ausreichende Verschwenkbarkeit um ein vertikales Gelenk sichergestellt ist. Die Ausgestaltung des Gelenkes, um welches der Bügel relativ zu dem Rahmen verschwenkbar ist, kann dadurch erfolgen, daß zwischen dem Bügel und dem zweiten Balken des Rahmens eine vertikale Schwenkachse gelagert ist, welche ein Spiel aufweist und somit auch ein mögliches seitliches Verkippen des Bügels sicherstellt. Alternativ dazu ist es auch möglich, anstelle der Schwenkachse ein Kreuzgelenk oder Kugelgelenk vorzusehen.

In einer weiteren, besonders günstigen Ausgestaltung der Erfindung kann der Bügel um eine horizontale, senkrecht zu der Achse des Walzenelements angeordnete Achse kippbar sein. Diese. Art der Kippbarkeit ist vorteilhaft, um eine Pendelbarkeit der Ackerwalze zu schaffen, damit diese Bodenunebenheiten ausgleichen kann.

Um eine Konstruktion zu schaffen, welche die Bewegbarkeit des Bügels relativ zu dem Rahmen auch bei rauhen Einsatzbedingungen ermöglicht und ein hohes Maß an Betriebssicherheit gewährleistet, ist erfindungsgemäß vorgesehen, daß die Anschlußseite des Bügels verschiebbar in einer sich parallel zu dem ersten Balken erstreckenden, an diesem ausgebildeten Tasche gelagert ist. Eine derartige Tasche bietet eine ausreichende Führung, ist konstruktiv einfach aufbaubar und in ihrer Funktionsfähigkeit leicht überprüfbar. Mögliche Verschmutzungen können leicht und einfach entfernt werden.

Da der Bügel, wie oben beschrieben, innerhalb eines vorgegebenen Bereichs um eine horizontale, senkrecht zu dem Balken des Rahmens angeordnete Achse verschwenkbar sein soll, diese Schwenkbewegung jedoch unter Beibehaltung einer ausreichend stabilen Verbindung zwischen dem Balken und dem Rahmen erfolgen muß, erweist es sich als besonders günstig, wenn der Bügel an seiner Anschlußseite mit einem länglichen, zu dem ersten Balken parallelen Gehäuse verbunden ist, in welchem mit Spiel eine Tragachse geführt ist, deren Enden die Anschlüsse für die. Unterlenker des Dreipunktgestänges aufweist. Das Gehäuse ergibt eine feste Führung für die Tragachse und sichert eine ausreichende Kraftübertragung, während gleichzeitig durch das Spiel zwischen der Tragachse und dem Gehäuse das Maß der Verkippbarkeit vorgegeben ist. Dabei ist es besonders günstig, daß die Tragachse relativ zu dem Gehäuse um die horizontale Achse kippbar ist.

Der Anschluß des Bügels an den Oberlenker des Dreipunktgestänges erfolgt bevorzugterweise mittels eines schwenkbaren Armes, welcher an dem Bügel angebracht ist. Die Schwenkbarkeit des Armes gestattet es, diesen aus einer Anschlußstellung in eine Ruhestellung zu verschwenken, wenn er nicht benötigt wird, um eine Bewegung der Ackerwalze und deren Anbau nicht zu behindern und um gleichzeitig mögliche Verletzungsgefahren zu reduzieren.

Da die erfindungsgemäße Walze auch als Wendepacker verwendbar sein soll, ist am oberen Bereich des Bügels ein vertikaler Zapfen zum Anschluß einer Deichsel vorgesehen. Insbesondere bei der Verwendung als Wendepacker erweist es sich als besonders günstig, wenn der obenbeschriebene Arm schwenkbar ausgebildet ist.

Bei Verwendung der erfindungsgemäßen Akkerwalze als Nachläufer, beispielsweise zum Einsatz mit Drehpflügen, er weist es sich als besonders günstig, wenn der Rahmen im Bereich der beiden Balken mit Anschlußeinrichtungen für jeweils einen Fangarm versehen ist. Zweckmäßigerweise wird dann die seitliche Verschwenkbarkeit um das vertikale Gelenk gesperrt.

Falls die erfindungsgemäße Ackerwalze grundsätzlich nicht für den Frontanbau vorgesehen ist, kann es sich als günstig erweisen, die seitliche Verschiebbarkeit des Bügels relativ zu dem Rahmen ganz entfallen zu lassen, beispielsweise diese durch eine Verschraubung zu ersetzen.

Im folgenden wird die Erfindung anhand von Ausführungsbeispielen in Verbindung mit der Zeichnung beschrieben. Dabei zeigt:

Fig. 1 eine schematische Seitenansicht eines ersten Ausführungsbeispiels der erfindungsgemäßen Ackerwalze, welche in Form eines einreihigen Packers ausgebildet ist;

Fig. 2 eine Vorderansicht auf den mittleren Bereich des in Fig. 1 gezeigten Ausführungsbeispiels; und

Fig. 3 eine Teil-Seitenansicht eines weiteren Ausführungsbeispiels der erfindungsgemäßen Akkerwalze.

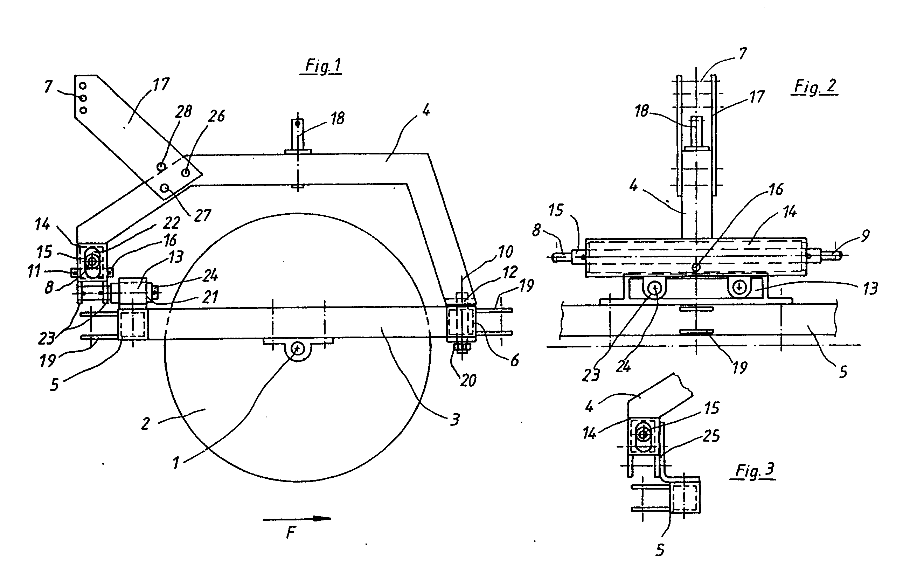

In Fig. 1 ist ein erstes Ausführungsbeispiel der erfindungsgemäßen Ackerwalze dargestellt. Diese umfaßt Walzenelemente 2, welche beispielsweise in Form eines einreihigen Packers ausgebildet sein können und um eine horizontale Achse 1 drehbar sind. Das Walzenelement ist an einem Rahmen 3 angeordnet, welcher in sich geschlossen ausgeführt ist und einen ersten Balken 5 und einen zweiten Balken 6 umfaßt, welche jeweils parallel zu der horizontalen Achse 1 angeordnet sind. Das oder die Walzenelemente sind somit fest an dem starren Rahmen 3 gelagert.

Oberhalb des Rahmens 3 ist ein Bügel 4 vorgesehen, welcher sich in einer vertikalen Ebene mittig zu dem ersten und dem zweiten Balken 5, 6 erstreckt und diese verbindet. Der Bügel 4 übergreift, wie aus Fig. 1 ersichtlich ist, das Walzenelement 2.

Sowohl der Rahmen 3 als auch der Bügel 4 sind aus einem Vierkant-Hohlprofil gefertigt. Der Bügel 4 ist nicht mit dem Rahmen 3 fest verschweißt, er ist vielmehr mit dem zweiten Balken 6 so verbunden, daß eine Verschwenkbarkeit des Bügels 4 um eine vertikale Achse 10 erfolgen kann. Zu diesem Zwecke ist eine Schwenkachse 12 in Form eines Bolzens vorgesehen, welche beispielsweise an den Bügel 4 angeschweißt sein kann und mittels einer Mutter 20 gesichert ist.

Da der Bügel 4 an dem ersten Balken 5 zur Kraftübertragung in geeigneter Weise gelagert sein muß, ist erfindungsgemäß vorgesehen, daß der Bügel 4 mit zwei Rollen 21 verbunden ist, welche in einer horizontalen Tasche 13 geführt sind. Diese ist beispielsweise durch Verschweißung von Bandmaterialien ausgebildet und fest mit dem ersten Balken 5 verbunden. In Fig. 2 ist dargestellt, daß die Tasche 13 ein ausreichendes Querschnittsmaß aufweist, um eine seitliche Verschiebung dieses Anschußendes des Bügels 4 zu gewährleisten, wobei gleichzeitig sichergestellt ist, daß die Kräfte zwischen dem Bügel 4 und dem Rahmen 3 in ausreichender Weise übertragen werden können.

Erfindungsgemäß ist weiterhin vorgesehen, daß der Bügel 3 an seinem Anschlußende mit einem Gehäuse 14 verbunden ist, welches sich, wie in Fig. 2 ersichtlich ist, parallel zu dem ersten Balken 5 erstreckt. Das längliche Gehäuse 14 ist in Form eines Hohlgehäuses ausgebildet und dient der Aufnahme einer Tragachse 15, welche mit Spiel in dem Gehäuse geführt ist, insbesondere wie aus Fig. 1 ersichtlich ist, in vertikaler Richtung in dem Gehäuse bewegbar ist, während eine Bewegung in horizonaler Richtung verhindert wird. Es ist somit möglich, eine Pendelbewegung zwischen der Tragachse 15 und dem Rahmen 3 zu ermöglichen, damit beispielsweise das Walzenelement Bodenunebenheiten ausgleichen kann. Dies wird durch die Langlöcher 22 in der Seitenwandung des Gehäuses 14 erreicht. Somit ist der Bügel 4 relativ zu dem Rahmen 3 um eine horizontale Achse 11 (siehe Fig. 1) schwenkbar, welche senkrecht zur Drehachse 1 der Walzenelemente 2 angeordnet ist. Die Schwenkbarkeit oder Kippbarkeit erfolgt durch einen Bolzen oder eine Achse 16, welche in dem Gehäuse angeordnet ist (siehe insbesondere Fig. 2). Es erfolgt somit eine Abstützung des Rahmens 3 an dem Bügel 4 in der Mittelebene der Ackerwalze.

Wahlweise kann der Bolzen 16 entfernbar ausgebildet sein, so daß sich dann die Tragachse 15 gegen die Wandung des Gehäuses 14 anlegt und die Ackerwalze pendelfrei verfahren werden kann.

An der Unterseite des Gehäuses 14 sind Laschen 23 angeschweißt, welche Bolzen 24 halten, auf denen die Rollen 21 gelagert sind.

Wenn das erfindungsgemäße Gerät grundsätzlich nicht im Frontanbau verwendet werden soll, ist es möglich, auf die Rollen 21 und die Tasche 13 zu verzichten und den Rahmen 3 direkt mit dem Gehäuse 14 zu verbinden, so wie dies in schematischer Weise in Fig. 3 dargestellt ist. Hier erfolgt die Verbindung mittels eines Winkelprofils 25. Es ist jedoch auch möglich, in einem derartigen Anwendungsfall eine Verschiebbarkeit der Rollen 21 in der Tasche 13 dadurch zu unterbinden, daß ein nicht dargestelltes Blockierelement in die Tasche 13 eingebracht wird.

Um eine Verwendung der erfindungsgemäßen Ackerwalze als Nachläufer beim Einsatz mit Drehpflügen zu ermöglichen, sind am Rahmen 3 Anschlußeinrichtungen 19 in Form von Laschen ausgebildet, welche die Lagerstellen für schwenkbare Fangarme bilden. Die Fangarme sind in den Figuren nicht dargestellt.

Da erfindungsgemäß der Bügel 4 an einem Dreipunktgestell eines Schleppers befestigt werden soll, weist die Tragachse 15 Anschlüsse 8 und 9 auf, an welchen die Unterlenker des Dreipunktgestells befestigt werden können. Der Oberlenker wird an einen Anschluß 7 eines Arms 17 befestigt, welcher am oberen Bereich des Bügels 4 vorgesehen ist. Der Arm 17 ist verschwenkbar an dem Bügel 4 gelagert, um diesen von der in Fig. 1 gezeigten Anbauposition in eine Ruheposition zu verschwenken. Zu diesem Zwecke ist der Arm 17 mittels eines Schwenklagers 26 mit dem Bügel 4 verbunden. Eine weitere Kopplung des Arms 17 erfolgt über einen Bolzen 27, welcher durch den Arm 17 und den Bügel 4 durchführbar ist. Zur Fixierung des Armes 17 in seiner Ruhestellung weist dieser zusätzlich eine Ausnehmung 28 auf, durch welche der Bolzen 27 durchführbar ist. In der Ruhestellung ist der Arm 17 so verschwenkt, daß der mittlere Bereich des Bügels 4 am höchsten angeordnet ist.

Die Verschwenkbarkeit des Armes 17 erweist sich als notwendig, wenn das erfindungsgemäße Gerät als Wendepacker verwendet werden soll. Zu diesem Zweck ist an der Oberseite des Bügels 4 ein vertikaler Zapfen 18 befestigt, an welchem die Deichsel einer zu koppelnden Walze angeschlossen werden kann. Da der Arm 17 nach unten verschwenkt wurde, ist eine Schwenkung der Deichsel über einen Winkel von 180o möglich, um von einem Ende des Gerätes zum anderen Ende verschwenkt zu werden.

Die Erfindung ist nicht auf die gezeigten Ausführungs beispiele beschränkt, es ist vielmehr auch möglich, anstelle der Rollen 24 und der Tasche 13 lediglich eine einzige Rolle vorzusehen, mittels derer gleichzeitig eine Pendelbarkeit erzielt werden kann.

## Ansprüche

1. Ackerwalze insbesondere mit Fangarmanschlüssen für den Einsatz an Drehpflügen bzw. als Pflugnachläufer, mit zumindest einem um eine horizontale Achse (1) drehbaren Walzenelement (2) und einem in sich geschlossenen, das Walzenelement (2) lagernden, in einer horizontalen Ebene angeordneten Rahmen (3), gekennzeichnet durch einen Bügel (4), welcher sich in einer vertikalen Ebene mittig zwischen einem ersten (5) und einem zweiten (6) jeweils zur Achse (1) des Walzenelements (2) parallelen Balken des Rahmens (3) erstreckt und das Walzenelement (2) übergreift, mit Anschlüssen (7, 8, 9) zum Ankuppeln an ein Dreipunktgestänge eines Schleppers versehen ist, und um eine vertikale, im Bereich des der Anschlußseite des Bügels (4) gegenüberliegenden zweiten Balkens (6) angeordnete Achse (10) schwenkbar ist, wobei der Bügel (4) nicht demontierbar an den Rahmen (3) gelagert ist.

2. Ackerwalze nach Anspruch 1, dadurch gekennzeichnet, daß der Bügel (4) an dessen Anschlußseite seitlich relativ zu dem ersten Balken (5) des Rahmens (3) verschiebbar gelagert ist.

3. Ackerwalze nach Anspruch 2, dadurch gekennzeichnet, daß der Bügel (4) innerhalb eines vorgegebenen Schwenkwinkels verschwenkbar ist.

4. Ackerwalze nach einem der Ansprüche 1 bis 3, dadurch gekennzeichnet, daß der Bügel (4) um eine horizontale, senkrecht zu der Achse (1) des Walzenelements (2) angeordnete Achse (11) kippbar ist.

5. Ackerwalze nach einem der Ansprüche 1 bis 4, dadurch gekennzeichnet, daß der Bügel (4) an dem zweiten Balken (6) mittels eines eine Verschwenkung ermöglichenden vertikalen Bolzens (12) gelagert ist.

6. Ackerwalze nach einem der Ansprüche 1 bis 5, dadurch gekennzeichnet, daß der Bügel (4) an dem zweiten Balken (6) mittels eines Kreuzgelenks oder Kugelgelenks gelagert ist.

7. Ackerwalze nach einem der Ansprüche 2 bis 6, dadurch gekennzeichnet, daß die Anschlußseite des Bügels (4) verschiebbar in einer sich parallel zu dem ersten Balken (5) erstreckenden, an diesem ausgebildeten Tasche (13) gelagert ist.

8. Ackerwalze nach einem der Ansprüche 3 bis 7, dadurch gekennzeichnet, daß der Bügel (4) an seiner Anschlußseite mit einem länglichen, zu dem ersten Balken (5) parallelen Gehäuse (14) verbunden ist, in welchem mit Spiel eine Tragachse (15) geführt ist, deren Enden die Anschlüsse (8, 9) für die Unterlenker des Dreipunktgestänges aufweist.

9. Ackerwalze nach Anspruch 8, dadurch gekennzeichnet, daß die Tragachse (15) relativ zu dem Gehäuse (14) um einen horizontalen Bolzen (16) kippbar ist.

10. Ackerwalze nach einem der Ansprüche 1 bis 9, dadurch gekennzeichnet, daß der Bügel (4) einen von einer außer Betrieb befindlichen Stellung in eine Montagestellung schwenkbaren Arm (17) zum Anschluß an den Oberlenker des Dreipunktgestänges aufweist.

11. Ackerwalze nach einem der Ansprüche 1 bis 10, dadurch gekennzeichnet, daß am oberen Bereich des Bügels (4) ein vertikaler Zapfen (18) zum Anschluß einer Deichsel bei Verwendung der Ackerwalze als Wendepacker vorgesehen ist.

12. Ackerwalze nach einem der Ansprüche 1 bis 11, dadurch gekennzeichnet, daß der Rahmen (3) im Bereich des ersten Balkens (5) mit Anschlußeinrichtungen (19) für jeweils einen Fangarm bei Verwendung der Ackerwalze als Nachläufer versehen ist.

13. Ackerwalze nach einem der Ansprüche 1 bis 12, dadurch gekennzeichnet, daß die seitliche Verschiebbarkeit des Bügels (4) relativ zu dem Rahmen (3) blockierbar ist.

14. Ackerwalze nach einem der Ansprüche 1 bis 13, dadurch gekennzeichnet, daß der Bügel (4) mit dem Rahmen (3), vorzugsweise unter Verwendung eines Verbindungselements (25), verbindbar ist.

_Fig. 1_

_Fig. 2_

_Fig. 3_

F

EP 0 383 013 A2